# EUROPEAN PATENT APPLICATION

(11) **EP 1 185 124 A1**
(43) Date of publication of application: **06.03.2002**
(21) Application number: 01917603.1
(22) Date of filing: 29.03.2001
(51) Int. Cl.: H04Q 7/38

(54) **MOBILE STATION APPARATUS AND RADIO COMMUNICATION METHOD**

(30) Priority: 30.03.2000 JP 2000093643
(71) Applicant: MATSUSHITA ELECTRIC INDUSTRIAL CO., LTD., Kadoma-shi, Osaka 571-8501 (JP)
(72) Inventor: HIRAMATSU, Katsuhiko, Yokosuka-shi, Kanagawa 238-0031 (JP); KITADE, Takashi, Yokosuka-shi, Kanagawa 239-0847 (JP)
(74) Representative: Grünecker, Kinkeldey, Stockmair & Schwanhäusser Anwaltssozietät
(86) International application number: JP0102638
(87) International publication number: WO0176301

(57) **Abstract**

Propagation loss measuring section 207 measures propagation loss of each cell, propagation loss comparison section 208 compares propagation loss among respective cells, transmission slot control section 209 controls data composition section 211 and spreading section 213 so that signals are transmitted to a base station that exists in a cell with smaller propagation loss according to the switching cycle informed from the base station and acquired by switching cycle acquisition section 209. That is, mobile station 100 transmits dedicated communication channel signals by changing the status of time slot assignment for each switching cycle informed from the base station according to propagation loss.

## Description

### Technical Field

The present invention relates to a mobile station apparatus and radio communication method, and more particularly, to a mobile station apparatus and radio communication method used in a TDD (Time Division Duplex) based radio communication system.

### Background Art

In a cellular type mobile communication system, a mobile station normally carries out handover near a cell boundary whereby the mobile station switches the communication partner from one base station to another. Furthermore, the mobile station carries out handover between sectors in much the same way as for handover between cells. There are roughly two types of handover method; soft handover and hard handover.

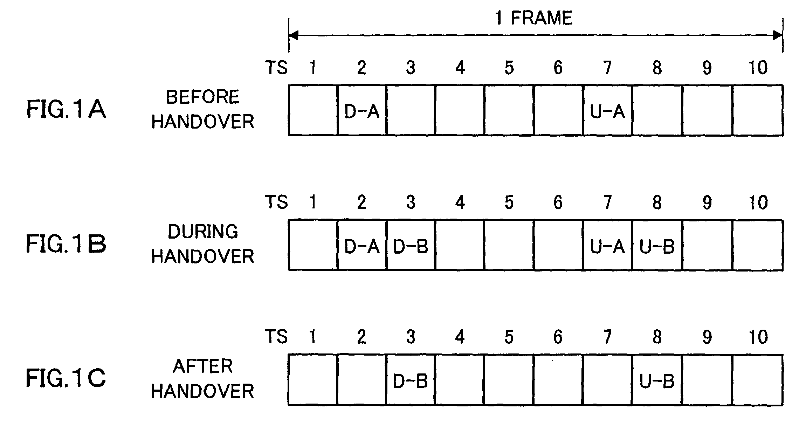

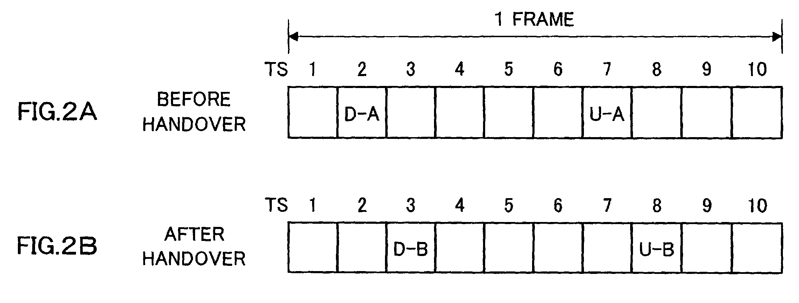

Inter-cell handover carried out in a TDD-based radio communication system will be explained using FIG.1A to FIG.1C, FIG.2A and FIG.2B below. Here, a TDD system refers to a system in which a channel of a same frequency band is divided into time slots and each time slot is assigned a communication channel for downlink (channel for the base station to transmit a signal to the mobile station) and a communication channel for uplink (channel for the mobile station to transmit a signal to the base station).

FIG.1A to 1C are schematic views showing examples of how time slots are assigned while soft handover is being executed, while FIG.2A and FIG.2B are schematic views showing examples of how time slots are assigned while hard handover is being executed. In the following explanations, suppose a time slot is TS, a downlink channel corresponding to cell A is D-A, an uplink channel corresponding to cell A is U-A, a downlink channel corresponding to cell B is D-B, and an uplink channel corresponding to cell B is U-B.

First, a case where soft handover takes place between cells will be explained. When the mobile station exists in cell A (that is, before handover), the mobile station is communicating with base station A covering cell A. Therefore, as shown in FIG.1A, D-A is assigned to TS2 and U-A is assigned to TS7.

Then, when the mobile station moves from cell A to cell B and comes close to the boundary between cell A and cell B, the mobile station starts to communicate with base station B covering cell B. Therefore, as shown in FIG.1B, D-B is newly assigned to TS3 and U-B is newly assigned to TS8. As a result, during handover, the communication channels are assigned as shown in FIG.1B. That is, in the vicinity of the cell boundary, the mobile station communicates with both base station A and base station B using both the communication channel corresponding to cell A and the communication channel corresponding to cell B. Thus, the state of communication between the mobile station and the base station becomes handover in progress.

Then, when the mobile station completely enters into cell B, the mobile station stops communicating with base station A. Thus, as shown in FIG.1C, communication channels are no longer assigned to TS2 and TS7 and the mobile station communicates with base station B using D-B assigned to TS3 and U-B assigned to TS8. With this, the handover ends.

Thus, soft handover includes a period in which communication is carried out using both the communication channel corresponding to cell A and the communication channel corresponding to cell B as shown in FIG.1B.

Then, a case where hard handover takes place between cells will be explained. When the mobile station exists in cell A (that is, before handover), communication channels are assigned as shown in FIG.2A in the same way as for the case with the above-described soft handover (FIG.1A). That is, as shown in FIG.2A, D-A is assigned to TS2 and U-A is assigned to TS7.

Then, when the mobile station moves from cell A to cell B and reaches the boundary between cell A and cell B, the status of communication channel assignment changes from a state shown in FIG.2A to a state shown in FIG.2B. That is, the mobile station stops communicating with base station A when it reaches the boundary between cell A and cell B and at the same time starts communicating with base station B. Therefore, as shown in FIG.2B, there are no more communication channels assigned to TS2 and TS7 and the mobile station communicates with the base station using D-B assigned to TS3 and U-B assigned to TS8. With this the handover ends.

Thus, hard handover has no period during which a communication is carried out using both the communication channel for cell A and communication channel for cell B as in the case of soft handover.

However, the conventional soft handover and conventional hard handover described above have the following advantages and disadvantages.

That is, during the above-described conventional soft handover, a communication is carried out using both the communication channel corresponding to cell A and the communication channel corresponding to cell B as shown in FIG.1B. That is, when soft handover takes place, a communication is carried out using a plurality of time slots for both the uplink and downlink. Thus, soft handover can reduce the possibility that the communication channel will be interrupted during handover and can thereby improve the reception performance of the mobile station. But nonetheless, soft handover has a disadvantage that interference with communications being carried out with other mobile stations increases. This disadvantage is attributable in the case of a TDD system to the fact that signals from a plurality of mobile stations are normally multiplexed on one time slot according to a CDMA (Code Division Multiple Access) system.

On the other hand, the above-described conventional hard handover has no period during which a communication is carried out using both the communication channel according to cell A and the communication channel according to cell B as in the case of soft handover. That is, during hard handover, a communication is always carried out using only one time slot of the uplink and one time slot of the downlink. Thus, while hard handover has an advantage of being able to reduce interference with communications being carried out with other mobile stations, hard handover has a disadvantage of increasing the possibility that the communication channel will be interrupted during handover, unable to improve the reception performance of the mobile station so much.

Thus, the conventional soft handover and conventional hard handover described above have their respective advantages and disadvantages.

### Disclosure of Invention

It is an object of the present invention to provide a mobile station apparatus and radio communication method capable of suppressing interference with communications being carried out with other communication partners and reducing the possibility that the communication channel will be interrupted.

In order to attain the above object, the present invention transmits signals using any one of time slots corresponding to cells or sectors during handover based on results of comparison of propagation path conditions of the respective cells or sectors.

### Brief Description of Drawings

FIG.1A is a schematic view showing an example (before handover) of how time slots are assigned during execution of soft handover;
FIG. 1B is a schematic view showing an example (during handover) of how time slots are assigned during execution of soft handover;
FIG.1C is a schematic view showing an example (after handover) of how time slots are assigned during execution of soft handover;
FIG.2A is a schematic view showing an example (before handover) of how time slots are assigned during execution of hard handover;
FIG.2B is a schematic view showing an example (after handover) of how time slots are assigned during execution of hard handover;
FIG.3 is a conceptual diagram of a cell of a radio communication system including a mobile station apparatus according to an embodiment of the present invention;
FIG.4 is a main block diagram showing a configuration of the mobile station apparatus according to the embodiment of the present invention;
FIG.5A is a schematic view showing an example (before handover) of how time slots are assigned to explain an operation of the mobile station apparatus according to the embodiment of the present invention;
FIG. 5B is a schematic view showing an example (during handover) of how time slots are assigned to explain an operation of the mobile station apparatus according to the embodiment of the present invention;
FIG.5C is a schematic view showing an example (during handover) of how time slots are assigned to explain an operation of the mobile station apparatus according to the embodiment of the present invention;
FIG.5D is a schematic view showing an example (after handover) of how time slots are assigned to explain an operation of the mobile station apparatus according to the embodiment of the present invention;
FIG.6 is a conceptual diagram of a sector of a radio communication system including the mobile station apparatus according to the embodiment of the present invention; and
FIG.7 is a main block diagram showing a configuration of a base station apparatus according to the embodiment of the present invention.

### Best Mode for Carrying out the Invention

With reference now to the attached drawings, embodiments of the present invention will be explained in detail below.

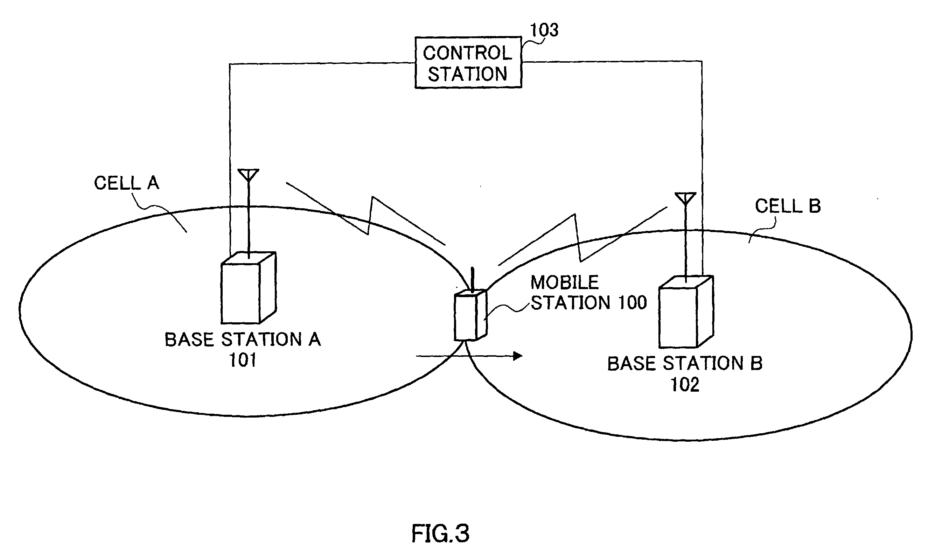

First, a case where handover takes place between cells will be explained. FIG.3 is a conceptual diagram of a cell of a radio communication system including a mobile station apparatus according to an embodiment of the present invention. This radio communication system is constructed of mobile station 100, base station A101 that covers cell A, base station B102 that covers cell B and control station 103.

In the vicinity of the boundary between cell A and cell B, mobile station 100 transmits signals by switching the transmission destination between base station A101 and base station B102 as appropriate. Base station A101 and base station B102 carry out CRC (Cyclic Redundancy Check) processing on the respective reception signals. Control station 103 selects either a signal sent from base station A101 or a signal sent from base station B102, whichever includes no error.

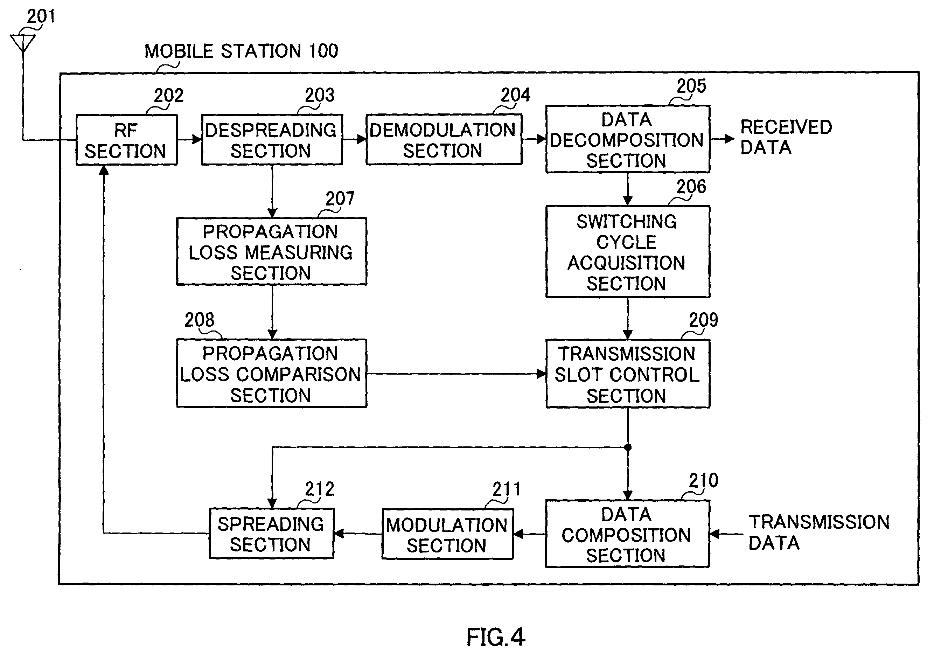

Then, a configuration of mobile station 100 will be explained. FIG.4 is a main block diagram showing a configuration of a mobile station apparatus according to the embodiment of the present invention.

In mobile station 100, RF section 202 carries out predetermined radio processing on a signal transmitted/received via antenna 201. Despreading section 203 despreads the reception signal. Demodulation section 204 applies predetermined demodulation processing on a dedicated communication channel signal of the signals despread by despreading section 203. Data decomposition section 205 decomposes the data output for each frame unit from demodulation section 204 into slots. This makes it possible to obtain reception data.

Switching cycle acquisition section 206 acquires information on the cycle of changing the transmission destination (hereinafter simply referred to as "switching cycle") from the reception signal. Propagation loss measuring section 207 measures propagation loss of each cell. Propagation loss comparison section 208 compares propagation losses in the cells. Transmission slot control section 209 controls which time slot should be used to transmit data based on the comparison result.

Data composition section 210 stores the transmission data in predetermined slots and then composes the slots into a frame under the control of transmission slot control section 209. Modulation section 211 applies predetermined modulation processing on the transmission data. Spreading section 212 applies spreading processing on the modulated data.

Then, an operation of the mobile station apparatus in the above configuration will be explained. FIG.5A to FIG.5D are schematic views showing examples of how time slots are assigned in order to explain the operation of the mobile station apparatus according to the embodiment of the present invention.

In the following explanations, suppose a time slot is TS, a downlink channel corresponding to cell A is D-A, a downlink channel corresponding to cell B is D-B, an uplink channel corresponding to cell A is U-A, and an uplink channel corresponding to cell B is U-B.

As shown in FIG.3, suppose now mobile station 100 is moving from cell A to cell B. First, as shown in FIG.5A, when mobile station 100 is located in cell A (that is, before handover), base station A101 transmits a common control channel signal and a dedicated communication channel signal to mobile station 100 using TS2. Thus, D-A in which the common control channel signal and a downlink dedicated communication channel signal are multiplexed is assigned to TS2. Here, suppose a CDMA system is used as the multiplexing system.

On the other hand, base station A101 and base station B102 transmit common control channel signals to mobile station 100 through all frames. That is, base station A101 transmits a common control channel signal using TS2, while base station B102 transmits a common control channel signal using any one of TSs shown in FIG.5A (now, suppose TS7 is selected here). Then, mobile station 100 measures the reception power of these common control channel signals according to instructions from base station A101 and reports the measured reception power values to base station A101.

Mobile station 100 then transmits a dedicated communication channel signal to base station A101 using TS3. Thus, TS3 is assigned U-A which is an uplink dedicated communication channel.

After this, mobile station 100 moves close to the boundary between cell A and cell B and when the reception power value of the common control channel signal transmitted from base station B102 becomes greater than the reception power value of the common control channel signal transmitted from base station A101, base station A101 instructs mobile station 100 to start handover. This causes the communications between mobile station 100 and base station A101 and between mobile station 100 and base station B102 to enter into a handover in progress.

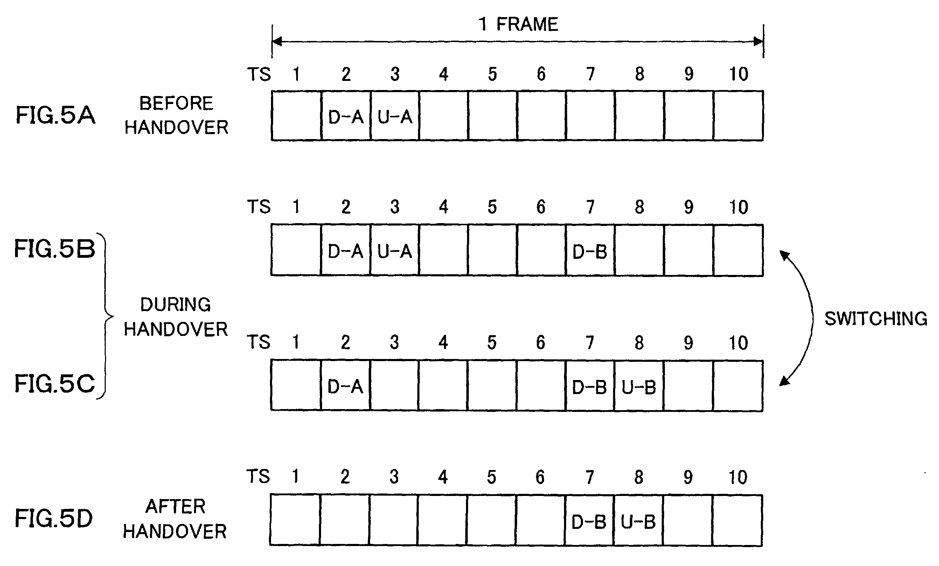

When handover starts, TS7 is assigned a channel for base station B102 to transmit a dedicated communication channel signal to mobile station 100 as shown in FIG.5B. Thus, D-B at TS7 is multiplexed with a common control channel and downlink dedicated communication channel. This causes base station B102 to start to transmit a dedicated communication channel signal to mobile station 100.

That is, during handover, mobile station 100 receives a common control channel signal and a dedicated communication channel signal transmitted from base station A101 and a common control channel signal and a dedicated communication channel signal transmitted from base station B102.

Moreover, during handover, mobile station 100 switches between channels according to the propagation path condition of each cell as appropriate to transmit dedicated communication channel signals. That is, during handover, the status of time slot assignment changes between the state in FIG.5B and the state in FIG.5C according to the propagation path condition of each cell. More specifically, mobile station 100 operates as shown below and the status of time slot assignment thereby changes as appropriate.

That is, the signal received via antenna 201 is subjected to predetermined radio processing by RF section 202 and then subjected to despreading processing by despreading section 203.

More specifically, in the assignment status shown in FIG.5B, despreading section 203 carries out despreading processing on TS2 and TS7 using the spreading codes assigned to the respective cells. This causes the common control channel signal transmitted from base station A101 and the common control channel signal transmitted from base station B102 to be extracted from the reception signal. The extracted common control channel signals are output to propagation loss measuring section 207. By the way, the spreading codes assigned to the respective cells correspond to the spreading code used by base station A101 and base station B102 for spreading processing on the common control channel signals.

Furthermore, despreading section 203 carries out despreading processing on TS2 and TS7 using the spreading code assigned to mobile station 100. This causes the dedicated communication channel signal transmitted from base station A101 and the dedicated communication channel signal transmitted from base station B102 to be extracted from the reception signal. At the start of handover, base station A101 and base station B102 inform mobile station 100 of the switching cycle using the dedicated communication channel signals. That is, the dedicated communication channel signals include information on the switching cycle informed from base station A101 and base station B102. The extracted dedicated communication channel signals are output to demodulation section 204.

Demodulation section 204 demodulates the dedicated communication channel signal transmitted from base station A101 and the dedicated communication channel signal transmitted from base station B102 and then combines these demodulated signals. This makes it possible to obtain data configured in frame units. The data configured in frame units is output to data decomposition section 205.

Data decomposition section 205 decomposes the data configured in frame units into data configured in slot units. This makes it possible to obtain reception data. The decomposed data is also output to switching cycle acquisition section 206.

Switching cycle acquisition section 206 acquires information on the switching cycle from the data and outputs the information to transmission slot control section 209. The switching cycle will be described later.

On the other hand, propagation loss measuring section 207 measures propagation loss in cell A and propagation loss in cell B using common control channel signals. More specifically, propagation loss measuring section 207 extracts information indicating transmission power values from the common control channel signal transmitted from base station A101 and the common control channel signal transmitted from base station B102. Furthermore, propagation loss measuring section 207 measures reception power values of these common control channel signals.

Then, propagation loss measuring section 207 subtracts the measured reception power values from the extracted transmission power values to measure propagation loss in cell A and propagation loss in cell B. The measured propagation loss values are output to propagation loss comparison section 208.

Propagation loss comparison section 208 compares the magnitude of propagation loss in cell A and the magnitude of propagation loss in cell B and selects the cell with smaller propagation loss. Propagation loss comparison section 208 then outputs a signal indicating the selection result to transmission slot control section 209.

Here, mobile station 100 carries out a radio communication with base station A101 and base station B102 according to a TDD system. The TDD system provides an extremely high correlation between the downlink propagation path characteristic and uplink propagation path characteristic. Thus, there is a high correlation between the propagation path condition in cell A when a common control channel signal is transmitted from base station A101 to mobile station 100 and the propagation path condition in cell A when a dedicated communication channel signal is transmitted from mobile station 100 to base station A101, and there is a high correlation between the propagation path condition in cell B when a common control channel signal is transmitted from base station B102 to mobile station 100 and the propagation path condition in cell B when a dedicated communication channel signal is transmitted from mobile station 100 to base station B102.

Then, transmission slot control section 209 determines the channel and time slot to be used to transmit a dedicated communication channel signal based on the selection result at propagation loss comparison section 208 as follows.

That is, in the assignment status shown in FIG.5B, in the case where cell A is selected by propagation loss comparison section 208, transmission slot control section 209 determines to use U-A to transmit data. Therefore, in this case, time slot assignment remains in the status shown in FIG.5B and mobile station 100 transmits a dedicated communication channel signal using TS3.

On the other hand, in the status shown in FIG.5B, in the case where cell B is selected by propagation loss comparison section 208, transmission slot control section 209 determines to use U-B to transmit data. Therefore, in this case, the status of time slot assignment changes from the status shown in FIG.5B to the status shown in FIG.5C and mobile station 100 transmits a dedicated communication channel signal using TS8.

Thus, transmission slot control section 209 determines the channel and time slot to be used to transmit a dedicated communication channel signal based on the selection result of propagation loss comparison section 208, and mobile station 100 can thereby respond to instantaneous variations of the propagation path condition and always transmit signals through a propagation path with the best propagation path condition. In other words, mobile station 100 can always transmit signals to a base station corresponding to a cell with the best propagation path condition.

Furthermore, transmission slot control section 209 determines the channel and time slot to be used to transmit a dedicated communication channel signal according to information on the switching cycle output from switching cycle acquisition section 206. That is, transmission slot control section 209 makes the above-described decision for each transmission unit indicated by the information on the switching cycle and changes the channels and time slots to be used to transmit a dedicated communication channel signal.

Here, in order to improve responsivity to instantaneous variations of the propagation path condition, it is desirable to make the above-described decision for every frame. However, in the case of inter-cell handover, the base station of the handover source is different from the base station of the handover destination, and therefore in the case where the transmission destination of a dedicated communication channel signal is changed for every frame, control station 103 needs to carry out error control processing such as deinterleave processing and error correcting processing. Thus, base station A101 and base station B102 need to send data prior to error control processing to control station 103.

However, it is often the case that data prior to error control processing is soft decision data. Furthermore, the soft decision data contains an extremely large amount of data. Thus, since the amount of soft decision data to be sent is very large, it is difficult to send the soft decision data from each base station to control station 103 from the standpoint of the amount of data to be sent.

Thus, in the case of inter-cell handover, this embodiment changes the channels and time slots to be used to transmit dedicated communication channel signals according to the unit of error control processing as appropriate. That is, in the case of inter-cell handover, this embodiment makes the switching cycle equal to the length of a block which is a unit of error control processing (hereinafter referred to as "error control block").

That is, at the start of handover, base station A101 and base station B102 inform mobile station 100 of the length of the error control block. During handover, transmission slot control section 209 makes the above-described decision for every error control block and switches between channels and time slots to be used to transmit dedicated communication channel signals for every error control block.

This allows base station A101 and base station B102 to perform error control processing at their own stations. Thus, data sent from each base station to control station 103 becomes hard decision data, which drastically reduces the amount of data to be sent compared to the soft decision data. This makes it possible to send data from each base station to control station 103.

Then, transmission slot control section 209 generates information indicating which dedicated communication channel should be used to transmit data (hereinafter referred to as "channel information") and information indicating which time slot should be used to transmit data (hereinafter referred to as "slot information") and outputs the informations to data composition section 210 and spreading section 212. Transmission slot control section 209 generates channel information and slot information for every error control block.

Data composition section 210 stores the transmission data in predetermined slots according to the slot information and then composes a plurality of slots into a frame. More specifically, when a dedicated communication channel signal is transmitted to base station A101, data composition section 210 stores the transmission data in TS3 as shown in FIG.5B. On the other hand, when a dedicated communication channel signal is transmitted to base station B102, data composition section 210 stores the transmission data in TS8 as shown in FIG.5C.

The data composed into a frame is output to modulation section 211 and subjected to predetermined modulation processing by modulation section 211. The modulated data is output to spreading section 212.

Spreading section 212 applies spreading processing to the modulated data according to the channel information and slot information. More specifically, when a dedicated communication channel signal is transmitted to base station A101, spreading section 212 applies spreading processing to the data stored in TS3 using the spreading code assigned to cell A at the timing at which TS3 is input. On the other hand, when a dedicated communication channel signal is transmitted to base station B102, spreading section 212 applies spreading processing to the data stored in TS8 using the spreading code assigned to cell B at the timing at which TS8 is input.

In the case where the propagation path condition in cell A is better than the propagation path condition in cell B, a dedicated communication channel signal is transmit to base station A101, and in the case where the propagation path condition in cell B is better than the propagation path condition in cell A, a dedicated communication channel signal is transmit to base station B102.

The data subjected to spreading processing is output to RF section 202, subjected to predetermined radio processing by RF section 202, and then transmitted via antenna 201.

The dedicated communication channel signal transmitted from mobile station 100 is received by base stationA101 or base station B102. After the demodulation processing is carried out on the dedicated communication channel signal, base station A101 or base station B102 carries out error control processing and a CRC and sends the signal to control station 103. That is, the data sent from each base station to control station 103 becomes hard decision data with the CRC result added. Then, control station 103 compares the CRC results of the data sent from the base stations and selects the data without errors. The selected data is output to a communication network (not shown).

More specifically, when the assignment status is the status shown in FIG.5B, since mobile station 100 transmits a dedicated communication channel signal to base station A101 using TS3, base station A101 applies demodulation processing to the dedicated communication channel signal and then carries out error control processing and a CRC. Then, base station A101 sends the data with the CRC result added to control station 103.

Furthermore, when the assignment status is the status shown in FIG.5B, since mobile station 100 does not transmit a dedicated communication channel signal to base station B102, base station B102 regards the CRC result as NG. Then, base station B102 sends predetermined data with the CRC result regarded as NG to control station 103.

On the other hand, when the assignment status is the status shown in FIG.5C, since mobile station 100 transmits a dedicated communication channel signal to base station B102 using TS8, base station B102 applies demodulation processing to the dedicated communication channel signal and then carries out error control processing and a CRC. Then, base station B102 sends the data with the CRC result added to control station 103.

Furthermore, when the assignment status is the status shown in FIG.5C, since mobile station 100 does not transmit a dedicated communication channel signal to base station A101, base station A101 regards the CRC result as NG. Then, base station A101 sends predetermined data with the CRC result regarded as NG to control station 103.

Control station 103 compares the CRC results added to the data sent from the respective base stations and selects data whose CRC result is not NG. That is, when the assignment status is the status shown in FIG.5B, since the CRC result regarded as NG is added to the data sent from base station B102, control station 103 selects the data sent from base station A101. On the other hand, when the assignment status is the status shown in FIG.5C, since the CRC result regarded as NG is added to the data sent from base station A101, control station 103 selects the data sent from base station B102.

Thus, control station 103 compares CRC results and only outputs data without errors to the communication network. Therefore, even if mobile station 100 changes the transmission destination of dedicated communication channel signals during handover, control station 103 can output appropriate data to the communication network without the need for each base station to carry out additional special processing.

Then, when a predetermined time has elapsed after handover started, mobile station 100 enters into the range of cell B completely and in this way the status of time slot assignment is stabilized in the status shown in FIG.5D. When the status of time slot assignment is stabilized in this status, base station A101 or base station B102 instructs mobile station 100 to end the handover. The handover ends in this way.

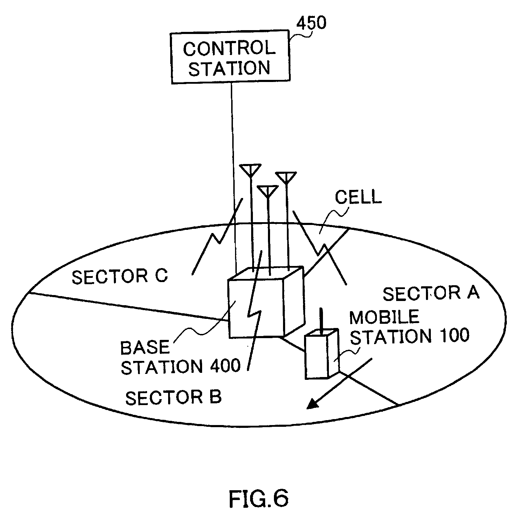

Then, a case where handover takes place between sectors will be explained. FIG.6 is a conceptual diagram of a sector of the radio communication system including the mobile station apparatus according to the embodiment of the present invention. Suppose mobile station 100 has the same configuration as that of the above-described mobile station.

In the vicinity of the boundary between sector A and sector B, mobile station 100 transmits signals by changing the transmission antenna to be used for transmission. Base station 400 carries out CRC processing on the reception signal. The configuration of mobile station 400 will be described later. Control station 450 selects a signal from among signals sent from the base station without errors.

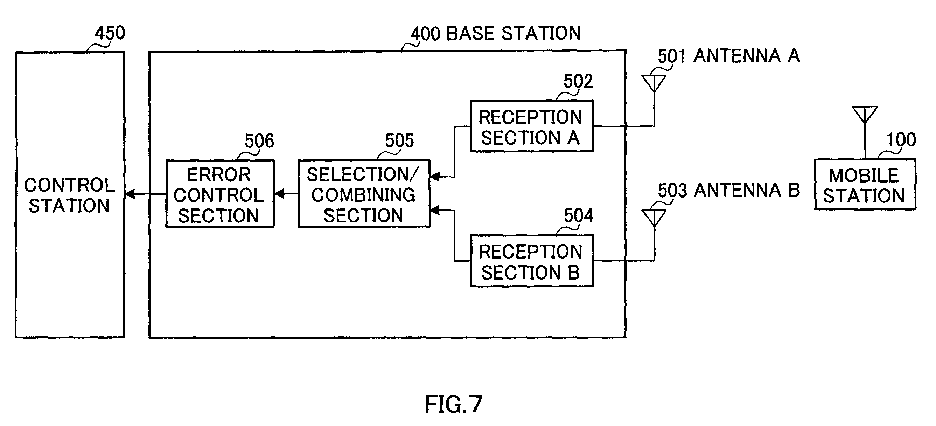

Then, the configuration of base station 400 will be described. FIG.7 is a main block diagram showing a configuration of the base station apparatus according to the embodiment of the present invention. Antenna A501 of base station 400 is an antenna provided for sector A. Antenna B503 is an antenna provided for sector B.

Reception section A502 carries out predetermined demodulation processing, etc. on the signal received via antenna A501. Reception section B504 carries out predetermined demodulation processing, etc. on the signal received via antenna B503.

Selection/combining section 505 selects one of the reception signals or combines the reception signals according to a predetermined method. It is predetermined which of selection or combining should be performed. Error control section 506 carries out error control processing and CRC processing on the signal output from selection/combining section 505.

Next, operations of the mobile station apparatus and base station apparatus in the above configurations will be explained.

In the following explanations, FIG.5A to FIG.5D will be used and suppose a time slot is TS, the downlink channel corresponding to sector A is D-A, the downlink channel corresponding to sector B is D-B, the uplink channel corresponding to sector A is U-A, and the uplink channel corresponding to sector B is U-B.

As shown in FIG.6, suppose mobile station 400 is moving from sector A to sector B. First, when mobile station 100 is located in sector A (that is, before handover), base station 400 transmits a common control channel signal and a dedicated communication channel signal to mobile station 100 from antenna A501 using TS2 as shown in FIG.5A. Thus, D-A in which the common control channel signal and the downlink dedicated communication channel signal are multiplexed is assigned to TS2. Here, suppose a CDMA system is used as the multiplexing system.

On the other hand, base station 400 transmits a common control channel signal to mobile station 100 from antenna A501 and antenna B503 through all frames. That is, base station 400 transmits a common control channel signal from antenna A501 using TS2 and transmits a common control channel signal from antenna B503 using any one of TSs (now, suppose TS7 is selected here). Then, mobile station 100 measures the reception power values of these common control channel signals according to instructions from base station 400 and reports the measured reception power values to base station 400.

Furthermore, mobile station 100 transmits a dedicated communication channel signal to antenna A501 using TS3. Thus, TS3 is assigned U-A which is the uplink dedicated communication channel.

After this, mobile station 100 moves close to the boundary between sector A and sector B and when the reception power value of the common control channel signal transmitted from antenna B503 becomes greater than the reception power value of the common control channel signal transmitted from antenna A501, base station 400 instructs mobile station 100 to start handover. This causes the communication between mobile station 100 and base station 400 to enter into a handover in progress.

When handover starts, TS7 is assigned a channel for base station 400 to transmit a dedicated communication channel signal from antenna B503 to mobile station 100 as shown in FIG.5B. Thus, D-B at TS7 is multiplexed with a common control channel and downlink dedicated communication channel. This causes base station 400 to start to transmit a dedicated communication channel signal to mobile station 100 from antenna B503.

That is, during handover, mobile station 100 receives a common control channel signal and a dedicated communication channel signal transmitted from antenna A501 and a common control channel signal and a dedicated communication channel signal transmitted from antenna B503.

Moreover, during handover, mobile station 100 changes channels according to the propagation path condition of each sector as appropriate and transmits dedicated communication channel signals. That is, during handover, the status of time slot assignment changes between the state in FIG. 5B and the state in FIG.5C as appropriate according to the propagation path condition of each sector. More specifically, mobile station 100 operates during handover as shown below and the status of time slot assignment thereby changes as appropriate.

That is, the signal received via antenna 201 is subjected to predetermined radio processing by RF section 202 and then subjected to despreading processing by despreading section 203.

More specifically, in the assignment status shown in FIG.5B, despreading section 203 carries out despreading processing on TS2 and TS7 using the spreading codes assigned to the respective sectors. This causes the common control channel signal transmitted from antenna A501 and the common control channel signal transmitted from antenna B503 to be extracted from the reception signal. The extracted common control channel signals are output to propagation loss measuring section 207. By the way, the spreading codes assigned to the respective sectors correspond to the spreading codes used by base station 400 to spread the common control channel signals.

Furthermore, despreading section 203 carries out despreading processing on TS2 and TS7 using the spreading code assigned to mobile station 100. This causes the dedicated communication channel signal transmitted from antenna A501 and the dedicated communication channel signal transmitted from antenna B503 to be extracted from the reception signal. At the start of handover, base station 400 informs mobile station 100 of the switching cycle using the dedicated communication channel signals. That is, the dedicated communication channel signals include information on the switching cycle informed from base station 400. The extracted dedicated communication channel signals are output to demodulation section 204.

Demodulation section 204 demodulates the dedicated communication channel signal transmitted from antenna A501 and the dedicated communication channel signal transmitted from antenna B503 and then combines these demodulated signals. This makes it possible to obtain data configured in frame units. The data configured in frame units is output to data decomposition section 205.

Data decomposition section 205 decomposes the data configured in frame units into data configured in slot units. This makes it possible to obtain reception data. The decomposed data is output to switching cycle acquisition section 206.

Switching cycle acquisition section 206 acquires information on the switching cycle from the data and outputs the information to transmission slot control section 209 . The switching cycle will be described later.

On the other hand, propagation loss measuring section 207 measures propagation loss in sector A and propagation loss in sector B using common control channel signals. More specifically, propagation loss measuring section 207 extracts information indicating transmission power values from the common control channel signal transmitted from antenna A501 and the common control channel signal transmitted from antenna B503. Furthermore, propagation loss measuring section 207 measures reception power values of these common control channel signals.

Then, propagation loss measuring section 207 subtracts the measured reception power values from the extracted transmission power values to measure propagation loss in sector A and propagation loss in sector B. The measured propagation loss values are output to propagation loss comparison section 208.

Propagation loss comparison section 208 compares the magnitude of propagation loss in sector A and the magnitude of propagation loss in sector B and selects the sector with smaller propagation loss. Propagation loss comparison section 208 then outputs a signal indicating the selection result to transmission slot control section 209.

Here, mobile station 100 carries out a radio communication with base station 400 according to a TDD system. The TDD system provides an extremely high correlation between the downlink propagation path characteristic and uplink propagation path characteristic. Thus, there is a high correlation between the propagation path condition in sector A when a common control channel signal is transmitted from antenna A501 to mobile station 100 and the propagation path condition in sector A when a dedicated communication channel signal is transmitted from mobile station 100 to antenna A501, and there is a high correlation between the propagation path condition in sector B when a common control channel signal is transmitted from antenna B503 to mobile station 100 and the propagation path condition in sector B when a dedicated communication channel signal is transmitted from mobile station 100 to antenna B503.

Then, transmission slot control section 209 determines the channel and time slot to be used to transmit a dedicated communication channel signal based on the selection result at propagation loss comparison section 208 as follows.

That is, in the assignment status shown in FIG.5B, in the case where sector A is selected by propagation loss comparison section 208, transmission slot control section 209 determines to use U-A to transmit data. Therefore, in this case, time slot assignment remains in the status shown in FIG.5B and mobile station 100 transmits a dedicated communication channel signal using TS3.

On the other hand, in the assignment status shown in FIG.5B, in the case where sector B is selected by propagation loss comparison section 208, transmission slot control section 209 determines to use U-B to transmit data. Therefore, in this case, the status of time slot assignment changes from the status shown in FIG.5B to the status shown in FIG.5C and mobile station 100 transmits a dedicated communication channel signal using TS8.

Thus, transmission slot control section 209 determines the channel and time slot to be used to transmit a dedicated communication channel signal based on the selection result of propagation loss comparison section 208, and mobile station 100 can thereby respond to instantaneous variations of the propagation path condition and always transmit signals through a propagation path with the best propagation path condition. In other words, mobile station 100 can always transmit signals to the antenna corresponding to a sector with the best propagation path condition.

Furthermore, transmission slot control section 209 determines the channel and time slot to be used to transmit a dedicated communication channel signal according to information on the switching cycle output from switching cycle acquisition section 206. That is, transmission slot control section 209 makes the above-described decision for each transmission unit indicated by the information on the switching cycle and changes the channels and time slots to be used to transmit a dedicated communication channel signal.

Here, in order to improve responsivity to instantaneous variations of the propagation path condition, it is desirable to make the above-described decision for every frame. Furthermore, in the case of inter-sector handover, since handover is carried out within one base station, it is possible to carry out error control processing such as deinterleave processing and error correcting processing within base station 400 even if the transmission destination of a dedicated communication channel signal is changed for every frame.

Thus, in the case of inter-sector handover, this embodiment switches between channels and time slots to be used to transmit dedicated communication channel signals for every one frame as appropriate. That is, in the case of inter-sector handover, this embodiment makes the switching cycle equal to the length of the transmission cycle of a common control channel signal.

That is, at the start of handover, base station 400 informs mobile station 100 of the transmission cycle of the common control channel signal. During handover, transmission slot control section 209 makes the above-described decision for every one frame and switches between channels and time slots to be used to transmit dedicated communication channel signals for every one frame.

Then, transmission slot control section 209 generates channel information and slot information and outputs these information to data composition section 210 and spreading section 212. Transmission slot control section 209 generates channel information and slot information for every one frame.

Data composition section 210 stores the transmission data in predetermined slots according to the slot information and then composes a plurality of slots into a frame. More specifically, when a dedicated communication channel signal is transmitted to antenna A501, data composition section 210 stores the transmission data in TS3 as shown in FIG.5B. On the other hand, when a dedicated communication channel signal is transmitted to antenna B503, data composition section 210 stores the transmission data in TS8 as shown in FIG.5C.

The data composed into a frame is output to modulation section 211 and subjected to predetermined modulation processing by modulation section 211. The modulated data is output to spreading section 212.

Spreading section 212 applies spreading processing to the modulated data according to the channel information and slot information.

More specifically, when a dedicated communication channel signal is transmitted to antenna A501, spreading section 212 applies spreading processing to the data stored in TS3 using the spreading code assigned to sector A at the timing at which TS3 is input. On the other hand, when a dedicated communication channel signal is transmitted to antenna B503, spreading section 212 applies spreading processing to the data stored in TS8 using the spreading code assigned to sector B at the timing at which TS8 is input.

In the case where the propagation path condition in sector A is better than the propagation path condition in sector B, a dedicated communication channel signal is transmitted to antenna A501, and in the case where the propagation path condition in sector B is better than the propagation path condition in sector A, a dedicated communication channel signal is transmitted to antenna B503.

The data subjected to spreading processing is output to RF section 202, subjected to predetermined radio processing by RF section 202, and then transmitted via antenna 201.

The dedicated communication channel signal transmitted from mobile station 100 is received by antenna A501 and antenna B503.

Reception section A502 applies demodulation processing on the signal received via antenna A501. Reception section B504 applies demodulation processing on the signal received via antenna B503. Each demodulated signal is output to selection/combining section 505.

When reception section A502 only receives a dedicated communication channel signal transmitted using TS3 and reception section B504 only receives a dedicated communication channel signal transmitted using TS8, selection/combining section 505 selects a signal with better reception quality from among the signals output from the respective reception sections.

On the other hand, when reception section A502 and reception section B504 receive both the dedicated channel signal transmitted using TS3 and the dedicated channel signal transmitted using TS8, selection/combining section 505 combines the signals output from the respective reception sections using a predetermined method. The selected or combined signal is output to error control section 506.

Error control section 506 carries out error control processing and a CRC on the selected or combined signal and sends the signal to control station 450. That is, the data sent from base station 400 to control station 450 becomes hard decision data with the CRC result added. Control station 450 compares the CRC results of the data sent from the respective base stations including base station 400 and selects data without errors. The selected data is output to a communication network (not shown).

Then, when a predetermined time has elapsed after handover started, mobile station 100 enters into the range of sector B completely and in this way the status of time slot assignment is stabilized in the status shown in FIG.5D. When the status of time slot assignment is stabilized in this status, base station 400 instructs mobile station 100 to end the handover. The handover ends in this way.

As explained above, this embodiment transmits a dedicated communication channel signal using a propagation path with minimum propagation loss, making it possible to respond to instantaneous variations of the propagation path condition and always transmit dedicated communication channel signals through a propagation path with the best propagation path condition.

Furthermore, since this embodiment transmits a dedicated communication channel signal by selecting a propagation path with minimum propagation loss, only one time slot is used for each frame to transmit an uplink dedicated communication channel signal. Thus, compared to a case where dedicated communication channel signals are transmitted using a plurality of slots during handover, this embodiment can not only reduce interference with other communications but also reduce power consumption of the mobile station.

Moreover, this embodiment receives downlink dedicated communication channel signals using a plurality of slots and changes the status of time slot assignment as appropriate using a propagation path with minimum propagation loss during handover. Thus, this embodiment can reduce the possibility that communication channels will be interrupted during handover compared to the conventional case of hard handover.

According to this embodiment, the mobile station changes the status of time slot assignment according to the switching cycle informed from the base station, allowing the mobile station to change the switching cycle during inter-cell handover and switching cycle during inter-sector handover as appropriate. Thus, this embodiment makes it possible to change the status of time slot assignment in an appropriate switching cycle according to the type of handover.

This embodiment has described the case where a CDMA system is used as a signal multiplexing system on each time slot. However, the multiplexing system is not limited to this. An OFDM (Orthogonal Frequency Division Multiplexing) system, etc. can also be used as a signal multiplexing system on each time slot in this embodiment.

Furthermore, for convenience of explanations, this embodiment has described the case where the number of cells or sectors during handover is 2. However, this embodiment is not limited to this, but is also applicable to a radio communication system with three or more cells or sectors during handover.

Furthermore, this embodiment adopts a configuration in which one base station or antenna is selected as the transmission destination of dedicated communication channel signals based on propagation loss. However, the number of transmission destinations to be selected is not limited to this. This embodiment can also adopt a configuration in which two or more base stations or antennas are selected as the transmission destination of dedicated communication channel signals based on propagation loss.

Furthermore, this embodiment has described the case where a common control channel signal is used as the signal to measure propagation loss. However, this embodiment is not limited to this, but it is possible to measure propagation loss using any signal which is at least transmitted from the base station to all mobile stations with constant power.

Furthermore, this embodiment makes it possible to measure propagation loss using a signal transmitted from each base station to each mobile station with different power values. For example, the base station may perform transmission power control on downlink dedicated communication channel signals. In this case, since a transmission power value of a dedicated communication channel signal transmitted to each mobile station varies depending on the case, the mobile station cannot measure propagation loss simply from the reception level of the dedicated communication channel signal. However, even in this case, if the mobile station can estimate the transmission power value of the dedicated communication channel signal transmitted from each base station using a method using a command used for, for example, closed-loop transmission power control, the mobile station can measure propagation loss of the dedicated communication channel signal for every base station. Thus, the mobile station can also measure propagation loss using the dedicated communication channel signal transmitted from each base station.

Furthermore, this embodiment has adopted a configuration providing antennas in one-to-one correspondence with sectors. But this embodiment is not limited to this, and it is also possible to adopt a configuration with an array antenna forming directivities for respective sectors.

In the case of inter-cell handover, this embodiment changes the status of time slot assignment in units of error correcting blocks. However, the unit of changing the status of time slot assignment in the case of inter-cell handover is not limited to this. That is, if data can be transmitted without problems even if the amount of data transmitted from each base station to the control station is quite large, it is possible to change the status of time slot assignment for every one frame (that is, for each transmission cycle of common control channel signals) in the case of inter-cell handover in much the same way as in the case of inter-sector handover.

As described above, the present invention can suppress interference with other communications and reduce the possibility of communication channels of being interrupted during handover.

This application is based on the Japanese Patent Application No.2000-93643 filed on March 30, 2000, entire content of which is expressly incorporated by reference herein.

### Industrial Applicability

The present invention is applicable to a radio communication apparatus such as a mobile station apparatus and base station apparatus used in a TDD-based radio communication system.

## Claims

1. A mobile station apparatus comprising:
a measurer for measuring a propagation loss of each of a plurality of propagation paths during handover; and
a transmitter for transmitting signals by changing a transmission destination for each predetermined transmission unit based on the propagation loss.

2. The mobile station apparatus according to claim 1, wherein
said measurer measures the propagation loss in each of a plurality of cells; and
said transmitter transmits signals to a base station apparatus corresponding to the cell with the minimum propagation loss.

3. The mobile station apparatus according to claim 1, wherein
said measurer measures the propagation loss in each of a plurality of sectors; and
said transmitter transmits signals to an antenna corresponding to the sector with the minimum propagation loss.

4. The mobile station apparatus according to claim 1, wherein
said transmitter transmits signals using specific time slots corresponding to each transmission destination.

5. The mobile station apparatus according to claim 1, wherein
said transmitter changes the transmission destination for each frame unit.

6. The mobile station apparatus according to claim 1, wherein
said transmitter changes the transmission destination for each error correcting block unit.

7. The mobile station apparatus according to claim 1, wherein
said transmitter changes the transmission destination for each error correcting block unit in the case of inter-cell handover and changes the transmission destination for each frame unit in the case of inter-sector handover.

8. The mobile station apparatus according to claim 1, wherein
said transmitter changes the transmission destination for each switching cycle informed from the base station apparatus.

9. A base station apparatus that communicates with a mobile station apparatus, said mobile station apparatus comprising:
a measurer for measuring a propagation loss of each of a plurality of propagation paths during handover; and
a transmitter for transmitting signals by changing a transmission destination for each predetermined transmission unit based on the propagation loss.

10. A base station apparatus that communicates with a mobile station apparatus, wherein
said base station apparatus informs said mobile station apparatus of a switching cycle of a transmission destination.

11. A radio communication method comprising the steps of:
measuring a propagation loss of each of a plurality of propagation paths during handover; and
transmitting signals by changing a transmission destination for each predetermined transmission unit based on the propagation loss and using specific time slots corresponding to each transmission destination during handover.
